# EUROPÄISCHE PATENTSCHRIFT

(11) **EP 1 029 115 B1**
(45) Veröffentlichungstag und Bekanntmachung des Hinweises auf die Patenterteilung: **19.09.2001**
(21) Anmeldenummer: 98962204.8
(22) Anmeldetag: 03.11.1998
(51) Int. Cl.: C23C 30/00

(54) **ERZEUGNIS, INSBESONDERE BAUTEIL EINER GASTURBINE, MIT KERAMISCHER WÄRMEDÄMMSCHICHT**
PRODUCT,ESPECIALLY A GAS TURBINE COMPONENT, WITH A CERAMIC HEAT INSULATING LAYER
PRODUIT, EN PARTICULIER COMPOSANT D'UNE TURBINE A GAZ, A COUCHE THERMO-ISOLANTE EN CERAMIQUE

(30) Priorität: 03.11.1997 DE 19748537
(43) Veröffentlichungstag der Anmeldung: 23.08.2000
(73) Patentinhaber: SIEMENS AKTIENGESELLSCHAFT, 80333 München (DE); Rolls-Royce Deutschland Ltd & Co KG, 15827 Dahlewitz (DE)
(72) Erfinder: HEIMBERG, Beate, D-45478 Mülheim (DE); BEELE, Wolfram, D-40883 Ratingen (DE); KEMPTER, Karl, D-81477 München (DE); BAST, Ulrich, D-81667 München (DE); HAUBOLD, Thomas, D-61273 Weinheim (DE); HOFFMANN, Michael, D-71032 Böblingen (DE); ENDRISS, Axel, D-76133 Karlsruhe (DE); GREIL, Peter, D-91085 Weisendorf (DE); HONG, Chu-Wan, D-91356 Kirchehrenbach (DE); ALDINGER, Fritz, D-70771 Leinfelden-Echterdingen (DE); SEIFERT, Hans-J., D-70197 Stuttgart (DE)
(74) Vertreter: Zedlitz, Peter, Dipl.-Inf.
(86) Internationale Anmeldenummer: DE9803207
(87) Internationale Veröffentlichungsnummer: WO9923278

(56) Entgegenhaltungen:
- EP-A- 0 608 081
- WO-A-96/34128
- GB-A- 745 257
- US-A- 5 037 070
- US-A- 5 520 751
- PATENT ABSTRACTS OF JAPAN vol. 015, no. 505 (M-1194), 20. Dezember 1991 & JP 03 221444 A (ISHIKAWAJIMA HARIMA HEAVY IND CO LTD), 30. September 1991

## Beschreibung

Die Erfindung betrifft ein Erzeugnis, welches einem heißen, aggressiven Gas aussetzbar ist, mit einem metallischen Grundkörper, der eine ein Anbindungsoxid bildende Haftvermittlerschicht trägt und eine keramische Wärmedämmschicht aufweist. Die Erfindung betrifft weiterhin heißgasbeaufschlagte Bauteile in thermischen Maschinen, insbesondere in einer Gasturbine, die zum Schutz vor einem heißen aggressiven Gas mit einer Wärmedämmschicht versehen sind.

In der US-PS 4,585,481 ist eine Schutzschicht zum Schutz eines metallischen Substrats aus einer Superlegierung gegen Hochtemperatur-Oxidation und -Korrosion angegeben. Für die Schutzschichten findet eine MCrAlY-Legierung Anwendung. Diese Schutzschicht weist 5 bis 40% Chrom, 8 bis 35% Aluminium, 0,1 bis 2% eines sauerstoffaktiven Elements aus der Gruppe IIIb des Periodensystems einschließlich der Lanthanide und Actinide sowie Mischungen davon, 0,1 bis 7% Silizium, 0,1 bis 3% Hafnium sowie einen Rest umfassend Nickel und/oder Kobalt angegeben (Die prozentualen Angaben beziehen sich auf Gewichtsprozent). Die entsprechenden Schutzschichten aus MCrAlY-Legierungen werden gemäß der US-PS 4,585,481 mittels eines Plasmaspritzverfahrens aufgebracht.

In der US-PS 4,321,310 ist eine Gasturbinenkomponente beschrieben, die einen Grundkörper aus einer Nickel-Basis-Superlegierung MAR-M-200 aufweist. Auf den Grundwerkstoff ist eine Schicht aus einer MCrAlY-Legierung, insbesondere einer NiCOCrAlY-Legierung mit 18% Chrom, 23% Kobalt, 12,5% Aluminium, 0,3% Yttrium und einem Rest aus Nickel aufgebracht. Diese Schicht aus der MCrAlY-.Legierüng weist eine polierte Oberfläche auf, auf die eine Aluminiumoxidschicht aufgebracht ist. Auf diese Aluminiumoxidschicht ist eine keramische Wärmedämmschicht aufgebracht, welche eine stengelförmige Struktur aufweist. Durch diese kolumnare Mikrostruktur der Wärmedämmschicht stehen die Kristallitsäulen senkrecht zur Oberfläche des Grundkörpers. Als keramischer Werkstoff wird stabilisiertes Zirkonoxid angegeben.

In der US-PS 5,236,787 ist angegeben, zwischen dem Grundkörper und einer keramischen Wärmedämmschicht eine Zwischenschicht einzubringen, die aus einer Metall-Keramik-Mischung besteht. Dadurch soll der metallische Anteil dieser Zwischenschicht zum Grundkörper hin zunehmen und zur Wärmedämmschicht abnehmen. Umgekehrt soll entsprechend der keramische Anteil in Nähe des Grundkörpers niedrig, in Nähe der Wärmedämmschicht hoch sein. Als Wärmedämmschicht wird ein durch Yttriumoxid stabilisiertes Zirkonoxid mit Anteilen von Ceroxid angegeben. Durch die Zwischenschicht soll eine Anpassung der unterschiedlichen thermischen Ausdehnungskoeffizienten zwischen metallischem Grundkörper und keramischer Wärmedämmschicht erreicht werden.

Aus der EP 0 486 489 B1 ist eine korrosionsfeste Schutzbeschichtung für mittlere und hohe Temperaturen bis etwa 1050 °C für einen Gasturbinenteil aus einer Nickelbasis- oder Kobaltbasis-Legierung angegeben. Die Schutzbeschichtung weist in Gewichtsprozent 25 bis 40% Nickel, 28 bis 32% Chrom, 7 bis 9% Aluminium, 1 bis 2% Silizium und 0,3 bis 1% wenigstens eines reaktiven Elementes der Seltenen Erden, mindestens 5% Kobalt sowie wahlweise 0 bis 15% wenigstens eines der Elemente aus der Gruppe bestehend aus Rhenium, Platin, Palladium, Zirkon, Mangan, Wolfram, Titan, Molybdän, Niob, Eisen, Hafnium, Tantal auf. In einer konkreten Ausführungsform weist die Schutzbeschichtung die Elemente Nickel, Chrom, Aluminium, Silizium, Yttrium, und Rhenium in einem Bereich von 1 bis 15% sowie einen Rest aus Kobalt auf. Durch die Zugabe des Rheniums werden die Korrosionseigenschaften deutlich verbessert.

Aus der GB 745 257 A geht ein Verfahren zur Beschichtung eines Metalls oder eines anderen Materials mit stabilen Metalloxiden hervor. Als andere Materialien, welche als Substrat für eine Beschichtung Verwendung finden, werden keramische Materialien sowie Graphit angegeben. Dabei werden mittels thermischem Spritzen als Beschichtungsmaterial verschiedene Spinelle, z.B. Chromit FeO • Cr₂O₃, Chrysoberyl BeO • Al₂O₃, Gahnit ZuAl₂O₄, Geikilit (Mg, Fe) O • TiO₂ und MgO • Al₂O₃ (Aluminatspinell) auf das Substrat aufgebracht. Mit dem Verfahren werden vorgenannte Mineralien beispielsweise auf Turbinenschaufeln von Flugzeugtriebwerken aufgespritzt.

Aus der WO 96/34128 A1 ist ein Erzeugnis, insbesondere eine Gasturbinenschaufel, bekannt, die ein metallisches Substrat aufweist. Auf das metallische Substrat ist ein Schutzschichtsystem aufgetragen, welches eine Haftschicht und eine Wärmedämmschicht umfaßt. Die Wärmedämmschicht besteht aus einem kolumnaren keramischen Oxid, insbesondere aus einem teilstabilisierten Zirkoniumoxid. Diese Wärmedämmschicht ist über eine Verankerungsschicht an das metallische Substrat angebunden. Die Verankerungsschicht wiederum ist über die Haftvermittlerschicht an das metallische Substrat, insbesondere eine Nickelbasis- oder Kobaltbasis-Superlegierung angebunden. Die Haftvermittlerschicht besteht aus einer MCrAlY-Legierung, wie sie beispielsweise in den US-Patenten 5,154,885; 5,268,238; 5,273,712 und 5,401,307 angegeben ist. Die Verankerungsschicht besteht ihrerseits aus einem Spinell, welches Aluminium und ein anderes metallisches Element umfaßt. Das weitere metallische Element ist vorzugsweise Zirkonium. Die Verankerungsschicht wird vorzugsweise über ein PVD-Verfahren, insbesondere ein Elektronenstrahl-PVD-Verfahren, in einer sauerstoffhaltigen Atmosphäre aufgebracht. Während des Beschichtungsprozesses wird das metallische Substrat auf einer Temperatur von über 700 °C gehalten. Die Schichtdicke der Verankerungsschicht beträgt vorzugsweise unter 25 um.

In der WO 96/31293 A1 ist ein Schutzschichtsystem für eine Gasturbinenschaufel beschrieben, welches zum Schutz auf eine Superlegierungskomponente aufgebracht ist. Das Schutzschichtsystem umfaßt eine Wärmedämmschicht auf Zirkonoxidbasis. Auf diese auf Zirkonoxid basierende Wärmedämmschicht ist eine Verschleißschicht angebracht, die eine frühzeitige Beschädigung der Wärmedämmschicht verhindern soll. Ein solcher frühzeitiger Verschleiß der ungeschützten Wärmedämmschicht erfolgt bei Kontakt mit einem heißen aggressiven Gas, welches Oxide von Kalzium oder Magnesium enthält. Die Verschleißschicht weist eine Zusammensetzung auf, die mit den Oxiden in dem heißen aggressiven Gas reagiert, wodurch die Schmelztemperatur und Viskosität der Verschleißschicht erhöht wird. Die Verschleißschicht weist hierfür beispielsweise Aluminiumoxid, Magnesiumoxid, Chromoxid sowie ein Spinell, beispielsweise Magnesium-Aluminium-Oxid auf.

In der US-PS 5,466,280 (entspricht der GB 2 286 977 A1) ist eine Zusammensetzung für eine anorganische Beschichtung beschrieben, welche Beschichtung auf einen niedrig legierten Stahl aufgebracht ist und eine Hochtemperaturbeständigkeit aufweist. Die Haupteigenschaft der Beschichtung liegt darin, daß durch eine Einbindung von Eisen in die Beschichtung eine Erhöhung der Korrosionsfestigkeit erreicht wird. Die Beschichtung entsteht durch eine Umwandlung von verschiedenen Metalloxiden, wie beispielsweise Magnesiumoxid, Aluminiumoxid, Eisenoxid und Kalziumoxid bei Temperaturen von oberhalb 1000 °C in nicht näher spezifizierte Spinelle.

Aus der deutschen Patentanmeldung 15 83 971 ist eine feuerfeste Schutzschicht für metallurgische Öfen bekannt, welche Schutzschicht Spinell, nämlich MgO-Al₂O₃, aufweist. Für einen elektrochemischen Meßfühler zur Bestimmung des Sauerstoffgehaltes in Gasen, insbesondere Abgasen von Automobilverbrennungsmotoren, gibt die deutsche Patentschrift 37 37 215 einen Schutzüberzug an, der Spinell (MgO-Al₂O₃) enthält.

In der EP 0 684 322 A2 ist eine keramische Beschichtung auf Basis von MgO - SiO₂ und/oder MgO - Al₂O₃ angegbeben, die insbesondere aus Forsterite (Mg₂SiO₄) , Spinell (MgAl₂O₄) oder Cordierite (2MgO - 2Al₂O₃ - 5SiO₃) besteht.

Aufgabe der Erfindung ist es, ein Erzeugnis, insbesondere ein Bauteil einer Gasturbine, mit einem metallischen Grundkörper und einer darauf angeordneten Wärmedämmschicht anzugeben.

Die Erfindung geht von der Erkenntnis aus, daß bisher eingesetzte keramische Wärmedämmschichten trotz Einsatzes von beispielsweise teilstabilisiertem Zirkonoxid einen thermischen Ausdehnungskoeffizienten aufweisen, der nur etwa maximal 70% des thermischen Ausdehnungskoeffizienten des eingesetzten metallischen Grundkörpers, insbesondere aus einer Superlegierung, besitzt. Durch den gegenüber dem metallischen Grundkörper geringen thermischen Ausdehnungskoeffizienten der Wärmedämmschichten aus Zirkonoxid resultieren bei Beaufschlagung mit einem heißen Gas thermische Spannungen. Um bei wechselnder thermischer Belastung solchen resultierenden Spannungen entgegenzuwirken, ist eine dehnungstolerante Mikrostruktur der Wärmedämmschicht erforderlich, z.B. durch Einstellung einer entsprechenden Porosität oder einer stengelförmigen Struktur der Wärmedämmschicht. Bei einer Wärmedämmschicht auf Zirkonoxid-Basis erfolgt zudem ein Fortschreiten der Sinterung des Schichtmaterials im Betrieb eine Änderung der Mikrostruktur, ein Ausheilen der Porosität, ein Auftreten neuer Fehlstellen bzw. Risse, und gegebenenfalls ein Versagen der Wärmedämmschicht in thermischer und mechanischer Hinsicht. Zusätzlich können bei einer Wärmedämmschicht aus teilstabilisiertem Zirkonoxid mittels Stabilisatoren wie Yttriumoxid, Ceroxid oder Lanthanoxid Spannungen auftreten, die aus einer thermisch bedingten Phasenumwandlung (tetragonal in monoklin und kubisch) entstehen. Durch eine damit verbundene Volumenänderung ist eine maximale zulässige Oberflächentemperatur für Wärmedämmschichten aus Zirkonoxid gegeben.

Durch Verwendung eines Spinells ist eine Wärmedämmschicht gegebenenfalls unter Berücksichtigung von Mischkristallbildung und Mikrostrukturmodifikation gegeben, die einen hohen thermischen Ausdehnungskoeffizienten, eine geringe Wärmeleitfähigkeit, einen hohen Schmelzpunkt, eine hohe chemische Stabilität, eine geringe Sinterneigung und eine hohe Phasenstabilität aufweist.

Erfindungsgemäß wird die auf ein Erzeugnis gerichtete Aufgabe dadurch gelöst, daß die Wärmedämmschicht ein Spinell der Zusammensetzung AB₂X₄ aufweist, wobei X für Sauerstoff, Schwefel, Selen und/oder Tellur steht. A steht hierbei für ein Element oder mehrere Elemente der Gruppe umfassend Aluminium, Magnesium, Mangan, Eisen, Kobalt, Nickel, Kupfer, Zink, Cadmium, Silizium, Titan und Wolfram. B steht für ein odere mehrere Elemente der Gruppe umfassend Aluminium, Magnesium, Mangan, Eisen, Vanadium, Chrom, Gallium, Silizium, Titan, Natrium und Kalium.

Die Wärmedämmschicht ist mittelbar durch eine Haftvermittlerschicht an den Grundkörper angebunden. Die Anbindung erfolgt vorzugsweise über eine Oxidschicht, welche z.B. durch Oxidation der Haftvermittlerschicht gebildet ist. Die Anbindung kann auch oder zusätzlich über eine mechanische Verklammerung, z.B. durch eine Rauhigkeit des Grundkörpers oder der Haftvermittlerschicht, erfolgen.

Eine solche Wärmedämmschicht dient insbesondere der Verlängerung der Lebensdauer von heißgas-beaufschlagten Erzeugnissen, wie Bauteilen einer Gasturbine, Schaufeln und Hitzeschilde, und besitzt eine geringe Wärmeleitfähigkeit, einen hohen Schmelzpunkt sowie eine chemische Inertheit.

Es sei darauf hingewiesen, daß die Verbindung MgAl₂O₄ (Magnesiumaluminat) häufig bereits als das Spinell bezeichnet wird. Mit dem Ausdruck Spinell ist im Sinne der Erfindung die bereits oben aufgeführte Gruppe von Verbindungen der allgemeinen Form AB₂X₄ gemeint. Mit der Bezeichnung "Spinell" sind die sogenannten normalen Spinelle (AB₂X₄) sowie die "inversen" Spinelle (B(AB)₂X₄) gemeint. Neben den klassischen Spinellen, bei denen X für Sauerstoff steht, sind auch solche Stoffsysteme umfaßt, bei denen X für Selen, Tellur oder Schwefel steht. Beim normalen Spinell-Typus bilden die Sauerstoffatome annähernd ein kubisch-dichtes Gitter, in dessen Tetraederlücken sich 8 A-Atome und in dessen Oktaederlücken sich 16 3-Atome befinden. In den sogenannten inversen Spinells liegen dagegen 8 B-Atome in tetraedrischer, die übrigen 8 B-Atome sowie die 8 A-Atome in oktaedrischer Koordination vor.

Bevorzugt weist das Erzeugnis ein Spinell mit Sauerstoff auf. Hierbei steht A für ein metallisches Element mit der Wertigkeit 2⁺ und B für ein metallisches Element der Wertigkeit 3⁺ (sogen. 2-3-Spinelle). Bei dieser Klasse von Spinellen steht A vorzugsweise für Magnesium, Eisen, Zink, Mangan, Kobalt, Nickel, Titan, Kupfer, Cadmium und B für Aluminium, Eisen, Chrom, Vanadium.

Bevorzugt weist das Spinell Aluminium oder Chrom als B-Element und Magnesium, Nickel oder Kobalt als A-Element auf.

Ebenfalls bevorzugt weist die Wärmedämmschicht ein Spinell auf, bei dem B für Magnesium und A für Titan steht.

Neben den oben bereits angegebenen 2-3-Spinellen mit den Wertigkeiten A²⁺ und B³⁺ existieren weitere Spinelltypen mit anderen Wertigkeiten der Kationen, z.B. 1-6-Spinelle (WNa₂O₄), 2-4-Spinelle (z.B. Fe₂TiO₄). Neben den bereits genannten Elementen, die für das Symbol A stehen können, sind weiterhin Aluminium, Silizium, Titan und Wolfram einsetzbar. Mit B sind auch zusätzlich die Elemente Magnesium, Mangan, Gallium, Silizium, Natrium und Kalium umfaßt.

Die Wärmeleitfähigkeit eines bevorzugten Spinells liegt zwischen 1,0 W/mK und 5,0 W/mK. Der thermische Ausdehnungskoeffizient liegt vorzugsweise zwischen 6 x 10⁻⁶K und 12 x 10⁻⁶/K und der Schmelzpunkt bei über 1600 °C. Die angegebenen Wertebereiche für Ausdehnungskoeffizient und Wärmeleitfähigkeit gelten für Körper aus einem ternären Oxid bei im fertigungstechnischen Sinne "idealer" Zellenstruktur, d.h. ohne gezielt eingebrachte Porositäten. Beispielsweise liegt bei MgAl₂O₄ der Schmelzpunkt bei ca. 2100 °C, die Wärmeleitfähigkeit bei 4,0 W/mK bei 1945 °C und der thermische Ausdehnungskoeffizient bei 7,6 bis 9,2 x 10⁻⁶/K bei Temperaturen zwischen 25 und 1200 °C. Für CoAl₂O₄ liegt der Schmelzpunkt bei ca. 1955 °C, und der thermische Ausdehnungskoeffizient bei zwischen 7 bis 11 x 10⁻⁶/K bei Temperaturen zwischen 500 und 1500 °C. Für MgCr₂O₄ gilt ein Schmelzpunkt in der Größeordnung von 2400 °C, ein thermischer Ausdehnungskoeffizient zwischen 6,5 und 7,6 x 10⁻⁶/K bei 25 bis 1200 °C und eine Wärmeleitfähigkeit [W/mK] von 1,4 im Bereich von 25 bis 300 °C. Für CoCr₂O₄ liegt der Schmelzpunkt oberhalb von 1600 °C und der thermische Ausdehnungskoeffizient zwischen 7,5 bis 8,5 x 10⁻⁶/K bei 500 bis 1500 °C. Die Verbindung TiMg₂O₄ hat einen Schmelzpunkt von 1835 °C und einen thermischen Ausdehnungskoeffizienten von 6 bis 12 x 10⁻⁶/K im Bereich von 500 bis 1500 °C.

Vorzugsweise liegt das Spinell als eine Mischung im Dreistoffsystem der Art AB₂X₄-AX-B₂X₃ vor. Es ist ebenfalls möglich, daß ein metallisches Mischoxidsystem mit dem Spinell und einer weiteren Verbindung, insbesondere einem Oxid, vorliegt. Das Spinell oder ein als Mischung vorliegendes Spinell kann ein Oxid oder mehrere Oxide der Gruppe umfassend NiO, CoO, Al₂O₃, Cr₂O₃ aufweisen. Dies kann auch dann der Fall sein, wenn die genannten Oxide nicht bereits Bestandteil des Spinells sind. Insbesondere können die genannten Oxide bei einem Aluminat- bzw. Chromatspinell vorhanden sein.

Weiterhin kann das Spinell oder ein aus einer Mischung bestehendes Spinell ein Oxid oder mehrere Oxide der Gruppe umfassend Magnesiumoxid (MgO), Zirkonoxid (ZrO₂) und Hafniumoxid (HfO₂) aufweisen. Dies kann bei solchen Spinellen, bei denen die Oxide MgO, ZrO₂ und HfO₂ nicht bereits Bestandteil des Dreistoffsystems oder des Spinells sind, der Fall sein, insbesondere bei einem Chromatspinell oder einem Aluminatspinell. Ein in dem Spinell vorhandenes Zirkonoxid oder Hafniumoxid ist insbesondere durch Yttriumoxid (Y₂O₃) oder ein anderes Oxid der Seltenen Erden teilweise oder voll stabilisiert. Unter einem Metall der Seltenen Erden wird hierbei abkürzend eines der Elemente Scandium, Yttrium, Lanthan sowie die Lanthanide, wie Cer und Ytterbium verstanden. Weiterhin können auch Oxide der Actiniden zugemischt sein.

Die Haftvermittlerschicht weist vorzugsweise eine Legierung auf, welche zumindest ein Element des Spinells umfaßt. Durch eine zumindest teilweise Oxidation der Haftvermittlerschicht bildet sich mithin ein Oxid dieses auch in dem Spinell enthaltenen Elementes, beispielsweise Aluminium, Chrom, Kobalt oder andere, wodurch eine gute Haftung des Spinells an der Haftvermittlerschicht erfolgt. Die Haftvermittlerschicht ist vorzugsweise eine Legierung der Art MCrAlY, wobei M für ein Element oder mehrere Elemente aus der Gruppe Eisen, Kobalt oder Nickel, Cr für Chrom, Al für Aluminium, Y für Yttrium steht oder ein reaktives Element der Seltenen Erden. Weiterhin kann die Haftvermittlerschicht, beispielsweise Rhenium, von 1 bis 15 Gew.-% aufweisen. Der Chromgehalt liegt vorzugsweise in einem Bereich zwischen 3 bis 50%, insbesondere 12 bis 25%, der Aluminiumgehalt vorzugsweise zwischen 3 und 20%, insbesondere bei 5 bis 15%. Der Gehalt an Yttrium liegt vorzugsweise zwischen 0,01 und 0,3%.

Das Erzeugnis ist vorzugsweise ein Bauteil einer thermischen Strömungsmaschine, insbesondere einer Gasturbine. Insbesondere handelt es sich hierbei um eine Turbinenlaufschaufel, eine Turbinenleitschaufel oder ein Hitzeschild einer Brennkammer. Der metallische Grundkörper weist vorzugsweise eine Superlegierung auf Nickel-, Kobalt- und/oder Chrombasis auf. Es ist ebenfalls möglich, ein Bauteil eines Ofens oder ähnlichem mit einer Wärmedämmschicht aus einem Spinell zu versehen.

Der Vorteil der Spinelle liegt in einer hohen Toleranz gegenüber Verunreinigungen, z.B. durch Bildung von einfachen oder komplexen Mischkristallen bei Anwesenheit von Eisen, Aluminium, Nickel, Chrom oder anderen Metallen; einer guten Charakterisierung des Sinterverhaltens der hochschmelzenden Spinelle; eine im wesentlichen kubische Struktur mit einer daher quasi isotropen Wärmeausdehnung. Weiterhin weisen Spinelle eine gute chemische Resistenz, eine hohe Thermoschock-Beständigkeit und eine hohe Festigkeit auf. Selbst bei einem Übergang eines Spinells von seiner normalen Form in die inverse Form oder zumindest zum Teil in die inverse Form treten keine sprunghaften Änderungen der physikalisch-chemischen Eigenschaften auf. Der Übergang zwischen normalem und inversem Spinell kann somit als ein Ordnungs-Unordnungs-induzierter Phasenübergang zweiter Ordnung betrachtet werden, welcher für die Eigenschaften der Wärmedämmschicht keinen großen Einfluß ausübt.

Wärmedämmschichten mit einem Spinell lassen sich beispielsweise einfach durch Plasmaspritzen herstellen. Eine Wärmedämmschicht kann hierbei durch atmosphärisches Plasmaspritzen mit einer entsprechenden Porosität hergestellt werden. Alternativ ist ein Aufbringen der Wärmedämmschicht mittels eines Aufdampfverfahren, z.B. Elektronenstrahl-PVD-Verfahrens mit einer einstellbaren Stengelstruktur möglich.

Vorzugsweise erfolgt die Aufbringung der Wärmedämmschicht durch atmosphärisches Plasmaspritzen, insbesondere mit einer vorgebbaren Porosität. Es ist ebenfalls möglich, das metallische Mischoxidsystem mittels eines geeigneten Aufdampfverfahrens, eines geeigneten PVD-Verfahrens (Physical Vapour Deposition), insbesondere eines reaktiven PVD-Verfahrens, aufzubringen. Bei Aufbringen der Wärmedämmschicht mittels eines Aufdampfverfahrens, z.B. eines Elektronenstrahl-PVD-Verfahrens, wird, falls erforderlich, auch eine Stengelstruktur erreicht. Bei einem reaktiven PVD-Verfahren erfolgt eine Reaktion, insbesondere eine Umwandlung, der einzelnen Bestandteile eines ternären Oxides oder eines pseudoternären Oxides, erst während des Beschichtungsprozesses, insbesondere unmittelbar beim Auftreffen auf das Erzeugnis. Bei einem nicht reaktiven Aufdampfverfahren werden die bereits vorreagierten Produkte, insbesondere die ternären Oxide mit Perowskitstruktur, verdampft und scheiden sich wieder aus dem Dampf auf dem Erzeugnis ab. Die Verwendung vorreagierter Produkte ist insbesondere bei Anwendung eines Plasmaspritz-Verfahrens besonders vorteilhaft.

Die Herstellung (Synthese) der Spinelle, z.B. NiCr₂O₄, NiAl₂O₄ und MgCr₂O₄ kann durch das "Misch-Oxide-Verfahren" phasenrein erfolgen. Hierbei werden als Ausgangspulver die zugehörigen binären Oxide, wie beispielsweise Cr₂O₃, NiO, Al₂O₃, MgO eingesetzt. Diese Pulver können unter Isopropanol homogenisiert, kaltisostatisch gepreßt, insbesondere bei einem Druck von 625 mPa, und anschließend bei 1500 °C an Luft 50 Stunden lang getempert werden mit einer Heizrate von 5 K/min.

Anhand des in der Zeichnung dargestellten Ausführungsbeispiels wird das Erzeugnis mit der Wärmedämmschicht näher erläutert. Es zeigen:
- FIG 1: eine perspektivische Darstellung einer Gasturbinenlaufschaufel und
- FIG 2, 3: jeweils einen Ausschnitt eines Querschnitts durch die Turbinenschaufel analog Figur 1.

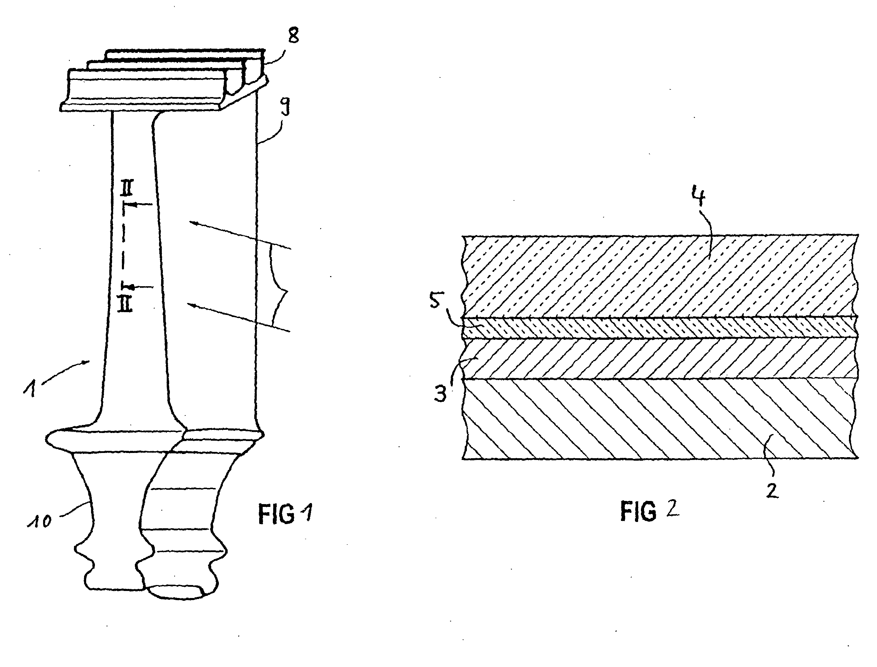

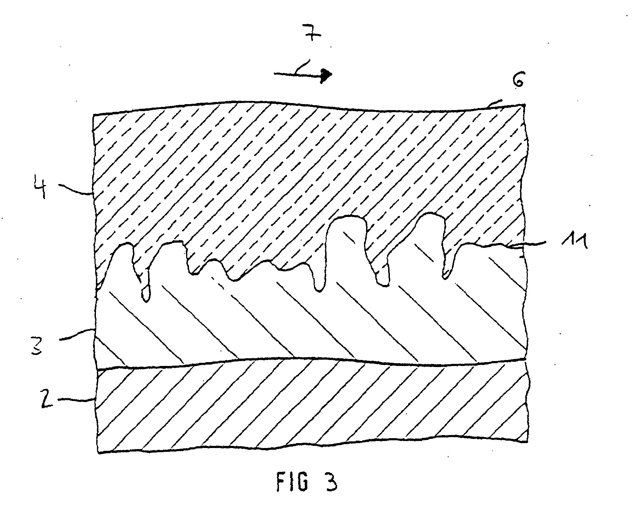

In Figur 1 ist ein Erzeugnis 1, hier eine Gasturbinenschaufel 1, mit einem metallischen Grundkörper 2 aus einer Nickelbasis-Kobaltbasis- oder Chrombasis-Superlegierung dargestellt. Die Gasturbinenschaufel 1 weist einen Schaufelfuß 10 zur Befestigung in einer nicht dargestellten Turbinenwelle, ein sich an den Schaufelfuß anschließendes Schaufelblatt 9 sowie ein das Schaufelblatt 9 begrenzendes Dichtband 8 auf. Zumindest an dem Schaufelblatt 9 ist die Gasturbinenschaufel 1 mit einer Haftvermittlerschicht 3 (siehe Figuren 2, 3) und einer darauf aufgebrachten Wärmedämmschicht 4 überzogen. Zwischen der Wärmedämmschicht 4 und der Haftvermittlerschicht 3 ist eine Oxidschicht 5 ausgebildet, die ein Oxid eines metallischen Elementes der Legierung der Haftvermittlerschicht 3 aufweist. Die Haftvermittlerschicht weist eine Legierung der Art MCrAlY auf, wobei M für ein Element oder mehrere Elemente der Gruppe umfassend Eisen, Kobalt, Nickel, Cr für Chrom, Al für Aluminium, Y für Yttrium oder ein Element der Seltenen Erden steht. Die auf die Haftvermittlerschicht 3 aufgebrachte Wärmedämmschicht 4 weist ein Spinell gemäß der Strukturformel AB₂O₄, insbesondere ein 2-3-Spinell auf. Das 2-3-Spinell weist ein metallisches Element für B, insbesondere Chrom oder Aluminium, sowie ein weiteres metallisches Element A, insbesondere Magnesium, Nickel oder Kobalt, auf, z.B. MgAl₂O₄, CoAl₂O₄, MgCr₂O₄, CoCr₂O, oder TiMg₂O₄. Ein 2-3-Spinell kann weiterhin als ein Dreistoffsystem aus dem eigentlichen Spinell und einem jeweiligen Oxid eines 2-wertigen metallischen Elementes und eines 3-wertigen metallischen Elementes vorliegen. Zusätzlich kann dem Spinell oder dem eine Mischung enthaltenden Spinell ein weiteres Oxid, insbesondere MgO, ZrO₂, HfO₂, NiO, CoO, Al₂O₃, Cr₂O₃ zugemischt sein. Über die Oxidschicht 5 und die Haftvermittlerschicht 3 ist eine gute Anbindung der Wärmedämmschicht 4 an den metallischen Grundkörper 2 gegeben.

In Figur 3 ist ein Schichtsystem analog zu Figur 2 dargestellt, bei dem auf den Grundkörper 2 eine Haftvermittlerschicht 3 und darauf die Wärmedämmschicht 4 aufgebracht ist. Die Haftvermittlerschicht 3 weist hierbei eine so rauhe Oberfläche auf, daß die Wärmedämmschicht 4 im wesentlichen ohne eine chemische Anbindung durch eine mechanische Verklammerung an die Haftvermittlerschicht 3 und damit an den Grundkörper 2 angebunden ist. Eine solche Rauhigkeit einer Oberfläche 11 der Haftvermittlerschicht 3 kann bereits durch das Aufbringen. der Haftvermittlerschicht 3, beispielsweise durch Vakuumspritzen, erfolgen. Eine unmittelbare Anbringung der Wärmedämmschicht 4 an den metallischen Grundkörper 2 kann hierbei auch durch eine entsprechende Rauhigkeit des metallischen Grundkörpers 2 erfolgen. Es ist ebenfalls möglich, zwischen der Haftvermittlerschicht 3 und der Wärmedämmschicht 4 eine zusätzliche Anbindungsschicht beispielsweise mit einem Aluminiumnitrid oder einem Chromnitrid aufzubringen.

Für eine gute und dauerhafte Anbindung auch bei einer Beaufschlagung des Erzeugnisses 1 mit einem heißen Gas 7 bei einem Betrieb der nicht dargestellten Gasturbinenanlage wird durch einen hohen thermischen Ausdehnungskoeffizienten des Spinells, welcher nahe bei dem thermischen Ausdehnungskoeffizienten der Superlegierung liegt, erreicht. Weiterhin trägt zu einer dauerhaften Anbindung bei, daß das Spinell eine geringe Wärmeleitfähigkeit, einen hohen Schmelzpunkt hat und keinen kritischen Phasenübergang bei den Temperaturen der Gasturbinenanlage von bis zu über 1250 °C an der Oberfläche 6 der Wärmedämmschicht 4 zeigt. Hierdurch wird selbst bei wechselnden thermischen Belastungen der Gasturbinenschaufeln 1 eine hohe Lebensdauer erreicht.

## Patentansprüche

1. Hochtemperaturbeständiges Bauteil (1) einer Gasturbine, welches einem heißen aggressiven Gas aussetzbar ist, mit einem metallischen Grundkörper (2), welcher eine darauf aufgebrachte Haftvermittlerschicht (3) und eine keramische Wärmedämmschicht (4) aufweist, wobei die Haftvermittlerschicht (3) zwischen dem Grundkörper (2) und der keramischen Wärmedämmschicht (4) angeordnet ist, und wobei die keramische Wärmedämmschicht (4) einen der Haftvermittlerschicht (3) zugewandten inneren Schichtbereich und einen von der Haftvermittlerschicht (3) abgewandten äußeren Schichtbereich umfaßt, wobei der innere Schichtbereich einen Spinell der Strukturformel AB₂X₄ und/oder B(AB)₂X₄ aufweist, und wobei
- X für ein Element oder mehrere Elemente der Gruppe umfassend Sauerstoff, Schwefel, Selen und Tellur,
- A für ein Element oder mehrere Elemente der Gruppe umfassend Aluminium, Mangan, Eisen, Kobalt, Nickel, Kupfer, Zink, Cadmium, Silizium, Titan und Wolfram und
- B für ein Element oder mehrere Elemente der Gruppe umfassend Aluminium, Magnesium, Mangan, Eisen, Vanadium, Chrom, Gallium, Silizium, Titan, Natrium und Kalium steht.

2. Bauteil (1) nach Anspruch 1,
**dadurch gekennzeichnet**, daß B für Aluminium (Aluminatspinell) oder Chrom (Chromspinell) und A für Nickel, Kobalt oder Titan und X für Sauerstoff steht.

3. Bauteil (1) nach Anspruch 1,
**dadurch gekennzeichnet, daß** B für Magnesium und A für Titan und X für Sauerstoff steht.

4. Hochtemperaturbeständiges Bauteil (1) einer Gasturbine, welches einem heißen aggressiven Gas aussetzbar ist, mit einem metallischen Grundkörper (2), welcher eine darauf aufgebrachte Haftvermittlerschicht (3) und eine keramische Wärmedämmschicht (4) aufweist, wobei die Haftvermittlerschicht (3) zwischen dem Grundkörper (2) und der keramischen Wärmedämmschicht (4) angeordnet ist, und wobei die keramische Wärmedämmschicht (4) einen der Haftvermittlerschicht (3) zugewandten inneren Schichtbereich und einen von der Haftvermittlerschicht (3) abgewandten äußeren Schichtbereich umfaßt, wobei der innere Schichtbereich einen Spinell der Strukturformel AB₂X₄ und/oder B (AB)₂X₄ aufweist,
**dadurch gekennzeichnet**, daß B für Aluminium (Aluminatspinell) oder Chrom (Chromspinell) und A für Magnesium und X für Sauerstoff steht.

5. Bauteil (1) nach einem der vorhergehenden Ansprüche,
**dadurch gekennzeichnet**, daß das Spinell als Mischung im Dreistoffsystem der Art AB₂X₄-AX-B₂X₃ vorliegt.

6. Bauteil (1) nach einem der vorhergehenden Ansprüche,
**dadurch gekennzeichnet**, daß das Mischoxidsystem mit dem Spinell ein weiteres Oxid oder mehrere weitere Oxide aufweist.

7. Bauteil (1) nach einem der vorhergehenden Ansprüche,
**dadurch gekennzeichnet**, daß das weitere Oxid mit Yttriumoxid (Y₂O₃) oder einem anderen Oxid der Seltenen Erden stabilisiert ist.

8. Bauteil (1) nach einem der vorhergehenden Ansprüche,
**dadurch gekennzeichnet**, daß zwischen Grundkörper (2) und Wärmedämmschicht (4) eine ein Anbindungsoxid bildende Haftvermittlerschicht (3) angeordnet ist.

9. Bauteil (1) nach Anspruch 8,
**dadurch gekennzeichnet**, daß die Haftvermittlerschicht (3) eine Legierung umfassend zumindest eines der Elemente des Spinells ist.

10. Bauteil (1) nach einem der vorhergehenden Ansprüche, **gekennzeichnet durch** eine Ausgestaltung als Turbinenlaufschaufel, Turbinenleitschaufel oder Hitzeschild einer Brennkammer.

11. Bauteil (1) nach einem der vorhergehenden Ansprüche,
**dadurch gekennzeichnet**, daß der thermische Ausdehnungskoeffizient α des Spinells zwischen 6*10⁻ ⁶/K und 17*10⁻⁶/K beträgt.

12. Bauteil (1) nach einem der vorhergehenden Ansprüche,
**dadurch gekennzeichnet**, daß die Wärmeleitfähigkeit des Spinells zwischen 1,0 W/mK und 4,0 W/mK beträgt.

13. Bauteil (3) nach einem der vorhergehenden Ansprüche, bei dem der metallische Grundkörper (4) eine Superlegierung auf Basis von Nickel, Kobalt und/oder Chrom aufweist.

14. Verfahren zur Herstellung einer Wärmedämmschicht (4) auf einem Bauteil (1) einer Gasturbine mit einem metallischen Grundkörper (2), welcher eine darauf aufgebrachte Haftvermittlerschicht (3) aufweist, wobei die Haftvermittlerschicht (3) zwischen dem Grundkörper (2) und der keramischen Wärmedämmschicht (4) angeordnet ist, und wobei die keramische Wärmedämmschicht (4) einen der Haftvermittlerschicht (3) zugewandten inneren Schichtbereich und einen von der Haftvermittlerschicht (3) abgewandten äußeren Schichtbereich umfaßt, bei dem Spinell der Strukturformel AB₂X₄ und/oder B(AB)₂X₄, wobei
- X für ein Element oder mehrere Elemente der Gruppe umfassend Sauerstoff, Schwefel, Selen und Tellur,
- A für ein Element oder mehrere Elemente der Gruppe umfassend Aluminium, Mangan, Eisen, Kobalt, Nickel, Kupfer, Zink, Cadmium, Silizium, Titan und Wolfram und
- B für ein Element oder mehrere Elemente der Gruppe umfassend Aluminium, Magnesium, Mangan, Eisen, Vanadium, Chrom, Gallium, Silizium, Titan, Natrium und Kalium steht, mittels Plasmaspritzens oder einem Aufdampfverfahren so auf das Bauteil (1) aufgebracht wird, daß ein spinellenthaltender innerer Schichtbereich gebildet wird.

## Claims

1. Component (1) of a gas turbine which can withstand high temperatures and which can be exposed to a hot aggressive gas, with a metallic base body (2) which has applied to it an adhesion promoter layer (3) arid a ceramic thermal barrier coating (4), the adhesion promoter layer (3) being arranged between the base body (2) and the ceramic thermal barrier coating (4), and the ceramic thermal barrier coating (4) comprising an inner layer region facing the adhesion promoter layer (3) and an outer layer region facing away from the adhesion promoter layer (3), the inner layer region having a spinel with the structural formula AB₂X₄ and/or B(AB)₂X₄, and in which
- X stands for an element or several elements from the group comprising oxygen, sulphur, selenium and tellurium,
- A stands for an element or several elements from the group comprising aluminium, manganese, iron, cobalt, nickel, copper, zinc, cadmium, silicon, titanium and tungsten, and
- B stands for an element or several elements from the group comprising aluminium, magnesium, manganese, iron, vanadium, chromium, gallium, silicon, titanium, sodium and potassium.

2. Component (1) according to Claim 1, **characterized in that** B stands for aluminium (aluminate spinel) or chromium (chromium spinel) and A stands for nickel, cobalt or titanium and X stands for oxygen.

3. Component (1) according to Claim 1, **characterized in that** B stands for magnesium and A stands for titanium and X stands for oxygen.

4. Component (1) of a gas turbine which can withstand high temperatures and which can be exposed to a hot aggressive gas, with a metallic base body (2) which has applied to it an adhesion promoter layer (3) and a ceramic thermal barrier coating (4), the adhesion promoter layer (3) being arranged between the base body (2) and the ceramic thermal barrier coating (4), and the ceramic thermal barrier coating (4) comprising an inner layer region facing the adhesion promoter layer (3) and an outer layer region facing away from the adhesion promoter layer (3), the inner layer region having a spinel with the structural formula AB₂X₄ and/or B(AB)₂X₄ **characterized in that** B stands for aluminium (aluminate spinel) or chromium (chromium spinel) and A stands for magnesium and X stands for oxygen.

5. Component (1) according to one of the preceding claims, **characterized in that** the spinel is present as a mixture in the ternary system of the type AB₂X₄-AX-B₂X₃.

6. Component (1) according to one of the preceding claims, **characterized in that** the mixed oxide system involving the spinel includes a further oxide or several further oxides.

7. Component (1) according to one of the preceding claims, **characterized in that** the further oxide is stabilized with yttrium oxide (Y₂O₃) or another rare-earth oxide.

8. Component (1) according to one of the preceding claims, **characterized in that** an adhesion promoter layer (3) forming a bonding oxide is arranged between the base body (2) and the thermal barrier coating (4).

9. Component (1) according to Claim 9, **characterized in that** the adhesion promoter layer (3) is an alloy comprising at least one of the elements of the spinel.

10. Component (1) according to one of the preceding claims, **characterized by** a configuration as a turbine rotor blade, a turbine guide blade or a heat shield of a combustion chamber.

11. Component (1) according to one of the preceding claims, **characterized in that** the coefficient of thermal expansion α of the spinel is between 6*10⁻⁶/K and 17*10⁻⁶/K.

12. Component (1) according to one of the preceding claims, **characterized in that** the thermal conductivity of the spinel is between 1.0 W/mK and 4.0 W/mK.

13. Component (3) according to one of the preceding claims, in which the metallic base body (4) is made of a superalloy based on nickel, cobalt and/or chromium.

14. Process for producing a thermal barrier coating (4) on a component (1) of a gas turbine having a metallic base body (2) which has applied to it an adhesion promoter layer (3), the adhesion promoter layer (3) being arranged between the base body (2) and the ceramic thermal barrier coating (4), and the ceramic thermal barrier coating (4) comprising an inner layer region facing the adhesion promoter layer (3) and an outer layer region facing away from the adhesion promoter layer (3), in which a spinel with the structural formula AB₂X₄ and/or B(AB)₂X₄, in which
- X stands for an element or several elements from the group comprising oxygen, sulphur, selenium and tellurium,
- A stands for an element or several elements from the group comprising aluminium, manganese, iron, cobalt, nickel, copper, zinc, cadmium, silicon, titanium and tungsten, and
- B stands for an element or several elements from the group comprising aluminium, magnesium, manganese, iron, vanadium, chromium, gallium, silicon, titanium, sodium and potassium,
is. applied to the component (1) by means of plasma spraying or a vapour deposition process in such a manner that a spinel-containing inner layer region is formed.

## Revendications

1. Elément (1) constitutif d'une turbine à gaz, qui résiste aux températures élevées et qui peut être soumis à un gaz agressif chaud, comprenant un corps (2) de base métallique sur lequel est déposée une couche (3) d'accrochage et une couche (4) calorifuge en céramique, la couche (3) d'accrochage étant interposée entre le corps (2) de base et la couche (4) calorifuge en céramique, et la couche (4) calorifuge en céramique comprenant une partie de couche intérieure tournée vers la couche (3) d'accrochage et une partie de couche extérieure éloignée de la couche (3) d'accrochage, la partie de couche intérieure comportant un spinelle de formule de structure AB₂X₄ et/ou B(AB)₂X₄ avec
- X représentant un élément ou plusieurs éléments du groupe comprenant l'oxygène, le soufre, le sélénium et le tellure;
- A représentant un élément ou plusieurs éléments du groupe comprenant l'aluminium, le manganèse, le fer, le cobalt, le nickel, le cuivre, le zinc, le cadmium, le silicium, le titane et le tungstène et
- B représentant un élément ou plusieurs éléments du groupe comprenant l'aluminium, le magnésium, le manganèse, le fer, le vanadium, le chrome, le gallium, le silicium, le titane, le sodium et le potassium.

2. Elément (1) suivant la revendication 1, **caractérisé en ce que** B représente l'aluminium (spinelle d'aluminate) ou le chrome (spinelle de chrome) et A représente le nickel, le cobalt ou le titane et X représente l'oxygène.

3. Elément (1) suivant la revendication 1, **caractérisé en ce que** B représente le magnésium, A représente le titane et X l'oxygène.

4. Elément (1) constitutif d'une turbine à gaz, qui résiste aux températures élevées et qui peut être soumis à un gaz agressif chaud, comprenant un corps (2) de base métallique sur lequel est déposée une couche (3) d'accrochage et une couche (4) calorifuge en céramique, la couche (3) d'accrochage étant interposée entre le corps (2) de base et la couche (4) calorifuge en céramique, et la couche (4) calorifuge en céramique comprenant une partie de couche intérieure tournée vers la couche (3) d'accrochage et une partie de couche extérieure éloignée de la couche (3) d'accrochage, la partie de couche intérieure comportant un spinelle de formule de structure AB₂X₄ et/ou B(AB)₂X₄, **caractérisé en ce que** B représente l'aluminium (spinelle d'aluminate) ou le chrome (spinelle de chrome), A représente le magnésium et X représente l'oxygène.

5. Elément (1) suivant l'une des revendications précédentes, **caractérisé en ce que** le spinelle se présente sous la forme d'un mélange d'un système à trois substances du type AB₂X₄-AX-B₂X₃.

6. Elément (1) suivant l'une des revendications précédentes, **caractérisé en ce que** le système d'oxyde mixte comporte avec le spinelle un autre oxyde ou plusieurs autres oxydes.

7. Elément (1) suivant l'une des revendications précédentes, **caractérisé en ce que** l'autre oxyde est stabilisé par de l'oxyde d'yttrium (Y₂O₃) ou par un autre oxyde des terres rares.

8. Elément (1) suivant l'une des revendications précédentes, **caractérisé en ce qu'**il est prévu entre le corps (2) de base et la couche (4) calorifuge une couche (3) d'accrochage formant un oxyde de liaison.

9. Elément (1) suivant la revendication 8, **caractérisé en ce que** la couche (3) d'accrochage est un alliage comprenant au moins l'un des éléments du spinelle.

10. Elément (1) suivant l'une des revendications précédentes, **caractérisé par** une conformation en aube mobile de turbine, en aube directrice de turbine ou en bouclier thermique d'une chambre de combustion.

11. Elément (1) suivant l'une des revendications précédentes, **caractérisé en ce que** le coefficient α de dilatation thermique du spinelle est compris entre 6*10⁻⁶/K et 17*10⁻⁶/K.

12. Elément (1) suivant l'une des revendications précédentes, **caractérisé en ce que** la conductivité thermique du spinelle est comprise entre 1,0 W/mK et 4,0 W/mK.

13. Elément (1) suivant l'une des revendications précédentes, dans lequel le corps (4) de base métallique comprend un superalliage à base de nickel, de cobalt et/ou de chrome.

14. Procédé de préparation d'une couche (4) calorifuge sur un élément (1) constitutif d'une turbine à gaz, ayant un corps (2) de base métallique sur lequel est déposée une couche (3) d'accrochage, la couche (3) d'accrochage étant interposée entre le corps (2) de base et la couche (4) calorifuge en céramique, et la couche (4) calorifuge en céramique comportant une partie de couche intérieure tournée vers la couche (3) d'accrochage et une partie de couche extérieure éloignée de la couche (3) d'accrochage, dans lequel
on dépose sur l'élément (1) au moyen d'une pulvérisation par plasma ou par un procédé de dépôt en phase vapeur un spinelle ayant la formule de structure AB₂X₄ et/ou B(AB)₂X₄, dans lesquelles
- X représente un élément ou plusieurs éléments du groupe comprenant l'oxygène, le soufre, le sélénium et le tellure;
- A représente un élément ou plusieurs éléments du groupe comprenant l'aluminium, le manganèse, le fer, le cobalt, le nickel, le cuivre, le zinc, le cadmium, le silicium, le titane et le tungstène et
- B représente un élément ou plusieurs éléments du groupe comprenant l'aluminium, le magnésium, le manganèse, le fer, le vanadium, le chrome, le gallium, le silicium, le titane, le sodium et le potassium, de façon à former une partie de couche la plus à l'intérieur contenant un spinelle.
